# EUROPEAN PATENT APPLICATION

(11) **EP 4 596 310 A1**
(43) Date of publication of application: **06.08.2025**
(21) Application number: 22964118.8
(22) Date of filing: 04.11.2022
(51) Int. Cl.: B60L 58/27

(54) **ADJUSTMENT METHOD, ELECTRONIC DEVICE, AND COMMUNICATION SYSTEM**

(71) Applicant: Shenzhen Yinwang Intelligent Technologies Co., Ltd., Shenzhen, Guangdong 518129 (CN)
(72) Inventor: WU, Haolin, Shenzhen, Guangdong 518129 (CN); ZHU, Hualin, Shenzhen, Guangdong 518129 (CN); YU, Dengjia, Shenzhen, Guangdong 518129 (CN); WANG, Wei, Shenzhen, Guangdong 518129 (CN)
(74) Representative: MERH-IP Matias Erny Reichl Hoffmann Patentanwälte PartG mbB
(86) International application number: PCT/CN2022/130124
(87) International publication number: WO 2024/092817

(57) **Abstract**

This application provides an adjustment method, an electronic apparatus, and a communication system, relates to the field of electronic apparatus technologies, and may be applied to a new energy vehicle. The method includes: The electronic apparatus receives a first message, where the first message indicates to adjust a temperature of a battery of a vehicle to a target temperature; and the electronic apparatus adjusts the temperature of the battery of the vehicle based on the first message, to cause the temperature of the battery of the vehicle to be adjusted to the target temperature when the vehicle arrives at a charging station. **In** this way, the temperature of the battery is adjusted before the vehicle arrives at the charging station, reducing time for adjusting the temperature. When the vehicle arrives at the charging station, the temperature of the battery is adjusted to the target temperature, so that the vehicle can be charged at a high charging rate when arriving at the charging station. Generally, charging time of the vehicle is shortened, and a charging rate of the battery is increased, thereby improving user charging experience.

## Description

### TECHNICAL FIELD

Embodiments of this application relate to the field of new energy technologies, and in particular, to an adjustment method, an electronic apparatus, and a communication system.

### BACKGROUND

With development of new energy vehicles, charging rates of the new energy vehicles need to be increased to improve user charging experience and product competitiveness. The charging rate of the new energy vehicle depends on a charging rate of a battery, and the charging rate of the battery varies with a temperature. How to adjust a temperature of the battery to increase a charging rate of the battery is a technical problem to be resolved by a person skilled in the art.

### SUMMARY

Embodiments of this application provide an adjustment method, an electronic apparatus, and a communication system, to shorten charging time of a vehicle, and increase a charging rate of a battery, thereby improving user charging experience.

To achieve the foregoing objective, the following technical solutions are used in embodiments of this application.

According to a first aspect, an embodiment of this application provides an adjustment method. The method may be performed by an electronic apparatus, or may be performed by a component (for example, a chip, a chip system, or a processor) located in the electronic apparatus. The following provides descriptions by using an example in which the method is performed by the electronic apparatus. The method includes: The electronic apparatus receives a first message, where the first message indicates to adjust a temperature of a battery of a vehicle to a target temperature. The electronic apparatus adjusts the temperature of the battery of the vehicle based on the first message, to cause the temperature of the battery of the vehicle to be adjusted to the target temperature when the vehicle arrives at a charging station.

The target temperature may be a temperature of the battery at which a charging rate of the battery is the highest. The target temperature may be a specific value, or may be a value range. For example, the target temperature may be 25°C to 40°C.

The first message may be an indication message. For example, the first message is indication information or request information. The first message may alternatively be a content message. For example, the first message may include vehicle information and/or charging station information.

In this way, the temperature of the battery is adjusted before the vehicle arrives at the charging station, reducing time for adjusting the temperature. When the vehicle arrives at the charging station, the temperature of the battery is adjusted to the target temperature, so that the vehicle can be charged at a high charging rate when arriving at the charging station. Generally, charging time of the vehicle is shortened, and a charging rate of the battery is increased, thereby improving user charging experience.

In a specific implementation, the first message is generated before the vehicle arrives at the charging station and when a first condition is met.

In a specific implementation, the first condition includes at least one of the following: A distance between the vehicle and the charging station is less than or equal to a first threshold, and/or estimated time for the vehicle to arrive at the charging station is less than or equal to a second threshold; a power of a target charging pile in the charging station is greater than a third threshold, and/or a current of the target charging pile is greater than or equal to a fourth threshold, and/or a voltage of the target charging pile is greater than or equal to a sixth threshold; and a remaining state of charge of the battery of the vehicle after the vehicle arrives at the charging station is greater than a fifth threshold.

In a specific implementation, that the electronic apparatus adjusts the temperature of the battery of the vehicle based on the first message may be specifically: When the temperature of the battery is not equal to the target temperature, the electronic apparatus adjusts the temperature of the battery of the vehicle based on the first message.

In a specific implementation, that the electronic apparatus adjusts the temperature of the battery of the vehicle may be specifically: The electronic apparatus adjusts the temperature of the battery of the vehicle based on a temperature control level. The temperature control level is determined based on a power of an available charging pile and a state of charge of the battery of the vehicle at a first moment.

In this embodiment of this application, different levels of temperature adjustments are implemented based on powers of different charging piles. In this way, operating energy consumption of a thermal management system is reduced while an optimal charging rate is ensured.

According to a second aspect, an embodiment of this application provides an adjustment method. The method may be performed by an electronic apparatus, or may be performed by a component (for example, a chip, a chip system, or a processor) located in the electronic apparatus. The following provides descriptions by using an example in which the method is performed by the electronic apparatus. The method may include: The electronic apparatus receives first information sent by a map application. The first information represents information about a vehicle and/or a charging station. The electronic apparatus receives second information sent by a battery management system. The second information includes a state of charge and a temperature of a battery. The electronic apparatus generates a first message based on the first information and the second information. The first message indicates to adjust the temperature of the battery of the vehicle to a target temperature. The electronic apparatus adjusts the temperature of the battery of the vehicle based on the first message, to cause the temperature of the battery of the vehicle to be adjusted to the target temperature when the vehicle arrives at the charging station.

In this way, the temperature of the battery is adjusted before the vehicle arrives at the charging station, reducing time for adjusting the temperature. When the vehicle arrives at the charging station, the temperature of the battery is adjusted to the target temperature, so that the vehicle can be charged at a high charging rate when arriving at the charging station. Generally, charging time of the vehicle is shortened, and a charging rate of the battery is increased, thereby improving user charging experience.

In a specific implementation, that the electronic apparatus adjusts the temperature of the battery of the vehicle based on the first message may be specifically: The electronic apparatus sends the first message to a thermal management system. The thermal management system is configured to adjust the temperature of the battery of the vehicle based on the first message.

In a specific implementation, that the electronic apparatus adjusts the temperature of the battery of the vehicle based on the first message may be specifically: The electronic apparatus sends the first message to the battery management system. The battery management system is configured to send a first request to a thermal management system based on the first message and the temperature of the battery, and the first request is used to request the thermal management system to adjust the temperature of the battery of the vehicle.

In a specific implementation, the first message is generated before the vehicle arrives at the charging station and when a first condition is met.

In a specific implementation, the first condition includes at least one of the following: A distance between the vehicle and the charging station is less than or equal to a first threshold, and/or estimated time for the vehicle to arrive at the charging station is less than or equal to a second threshold; a power of a target charging pile in the charging station is greater than a third threshold, and/or a current of the target charging pile is greater than or equal to a fourth threshold, and/or a voltage of the target charging pile is greater than or equal to a sixth threshold; and a remaining state of charge of the battery of the vehicle after the vehicle arrives at the charging station is greater than a fifth threshold.

In a specific implementation, that the electronic apparatus adjusts the temperature of the battery of the vehicle based on the first message may be specifically: When it is determined that the temperature of the battery is not equal to the target temperature, the electronic apparatus adjusts the temperature of the battery of the vehicle based on the first message.

In a specific implementation, that the electronic apparatus adjusts the temperature of the battery of the vehicle based on the first message may be specifically: The electronic apparatus determines a power of an available charging pile in the charging station and a state of charge of the battery of the vehicle at a first moment. The electronic apparatus determines a temperature control level based on the power of the available charging pile and the state of charge of the battery of the vehicle at the first moment. The electronic apparatus adjusts the temperature of the battery of the vehicle based on the temperature control level.

In this embodiment of this application, different levels of temperature adjustments are implemented based on powers of different charging piles. In this way, operating energy consumption of the thermal management system is reduced while an optimal charging rate is ensured.

In a specific implementation, a location of the vehicle, at least one charging station, and a working state of the at least one charging station are displayed on a first interface of the map application.

In a specific implementation, a navigation temperature adjustment state of the vehicle is further displayed on the first interface of the map application, and the navigation temperature adjustment state indicates that the vehicle is in a temperature adjustment state in a process of navigating to the charging station.

In this embodiment of this application, the navigation temperature adjustment state of the vehicle is displayed on the interface, so that the user can be intuitively notified of a temperature adjustment state of the battery of the vehicle. This facilitates flexible control by the user over a driving speed or track of the vehicle.

In a specific implementation, the first information includes at least one of the following: the distance between the vehicle and the charging station, the estimated time for the vehicle to arrive at the charging station, a type of each charging pile in the charging station, a power of each charging pile in the charging station, a rated current of each charging pile in the charging station, and a maximum voltage and a minimum voltage of each charging pile in the charging station.

In a specific implementation, the remaining state of charge of the battery is determined based on the state of charge of the battery, energy consumption information of the vehicle under different road conditions and at different vehicle speeds, and driving habit information of the user.

In this embodiment of this application, the remaining state of charge of the battery when the vehicle is navigated to a target charging station and arrives at the charging station can be more accurately calculated, based on the energy consumption information of the vehicle under different road conditions and at different vehicle speeds, and the driving habit information of the user. The temperature adjustment can be more accurate based on the accurate calculation.

In a specific implementation, the map application is configured to send the first information in response to a first operation. The first operation is an operation that the user sets the map application to navigate to the charging station or pass by the charging station.

According to a third aspect, an embodiment of this application provides an electronic apparatus. The electronic apparatus may include: a receiving unit, configured to receive a first message, where the first message indicates to adjust a temperature of a battery of a vehicle to a target temperature; and an adjustment unit, configured to adjust the temperature of the battery of the vehicle based on the first message, to cause the temperature of the battery of the vehicle to be adjusted to the target temperature when the vehicle arrives at a charging station.

In this way, the temperature of the battery is adjusted before the vehicle arrives at the charging station, reducing time for adjusting the temperature. When the vehicle arrives at the charging station, the temperature of the battery is adjusted to the target temperature, so that the vehicle can be charged at a high charging rate when arriving at the charging station. Generally, charging time of the vehicle is shortened, and a charging rate of the battery is increased, thereby improving user charging experience.

In a specific implementation, the first message is generated before the vehicle arrives at the charging station and when a first condition is met.

In a specific implementation, the first condition includes at least one of the following: A distance between the vehicle and the charging station is less than or equal to a first threshold, and/or estimated time for the vehicle to arrive at the charging station is less than or equal to a second threshold; a power of a target charging pile in the charging station is greater than a third threshold, and/or a current of the target charging pile is greater than or equal to a fourth threshold, and/or a voltage of the target charging pile is greater than or equal to a sixth threshold; and a remaining state of charge of the battery of the vehicle after the vehicle arrives at the charging station is greater than a fifth threshold.

In a specific implementation, the adjustment unit is specifically configured to: when the temperature of the battery is not equal to the target temperature, adjust the temperature of the battery of the vehicle based on the first message.

In a specific implementation, the adjustment unit is specifically configured to: adjust the temperature of the battery of the vehicle based on a temperature control level. The temperature control level is determined based on a power of an available charging pile and a state of charge of the battery of the vehicle at a first moment.

In this embodiment of this application, different levels of temperature adjustments are implemented based on powers of different charging piles. In this way, operating energy consumption of a thermal management system is reduced while an optimal charging rate is ensured.

According to a fourth aspect, an embodiment of this application provides an electronic apparatus, including: a first receiving unit, configured to receive first information sent by a map application, where the first information represents information about a vehicle and/or a charging station; a second receiving unit, configured to receive second information sent by a battery management system, where the second information includes a state of charge and a temperature of a battery; a generation unit, configured to generate a first message based on the first information and the second information, where the first message indicates to adjust the temperature of the battery of the vehicle to a target temperature; and an adjustment unit, configured to adjust the temperature of the battery of the vehicle based on the first message, to cause the temperature of the battery of the vehicle to be adjusted to the target temperature when the vehicle arrives at the charging station.

In this way, the temperature of the battery is adjusted before the vehicle arrives at the charging station, reducing time for adjusting the temperature. When the vehicle arrives at the charging station, the temperature of the battery is adjusted to the target temperature, so that the vehicle can be charged at a high charging rate when arriving at the charging station. Generally, charging time of the vehicle is shortened, and a charging rate of the battery is increased, thereby improving user charging experience.

In a specific implementation, the adjustment unit is configured to send the first message to a thermal management system. The thermal management system is configured to adjust the temperature of the battery of the vehicle based on the first message.

In a specific implementation, the adjustment unit is configured to send the first message to the battery management system. The battery management system is configured to send a first request to a thermal management system based on the first message and the temperature of the battery, and the first request is used to request the thermal management system to adjust the temperature of the battery of the vehicle.

In a specific implementation, the first message is generated before the vehicle arrives at the charging station and when a first condition is met.

In a specific implementation, the first condition includes at least one of the following: A distance between the vehicle and the charging station is less than or equal to a first threshold, and/or estimated time for the vehicle to arrive at the charging station is less than or equal to a second threshold; a power of a target charging pile in the charging station is greater than a third threshold, and/or a current of the target charging pile is greater than or equal to a fourth threshold, and/or a voltage of the target charging pile is greater than or equal to a sixth threshold; and a remaining state of charge of the battery of the vehicle after the vehicle arrives at the charging station is greater than a fifth threshold.

In a specific implementation, the adjustment unit is configured to: when it is determined that the temperature of the battery is not equal to the target temperature, adjust the temperature of the battery of the vehicle based on the first message.

In a specific implementation, the adjustment unit is configured to: determine a power of an available charging pile in the charging station and a state of charge of the battery of the vehicle at a first moment; determine a temperature control level based on the power of the available charging pile and the state of charge of the battery of the vehicle at the first moment; and adjust the temperature of the battery of the vehicle based on the temperature control level.

In this embodiment of this application, different levels of temperature adjustments are implemented based on powers of different charging piles. In this way, operating energy consumption of a thermal management system is reduced while an optimal charging rate is ensured.

In a specific implementation, a location of the vehicle, at least one charging station, and a working state of the at least one charging station are displayed on a first interface of the map application.

In a specific implementation, a navigation temperature adjustment state of the vehicle is further displayed on the first interface of the map application, and the navigation heating state indicates that the vehicle is in a temperature adjustment state in a process of navigating to the charging station.

In this embodiment of this application, the navigation temperature adjustment state of the vehicle is displayed on the interface, so that the user can be intuitively notified of a temperature adjustment state of the battery of the vehicle. This facilitates flexible control by the user over a driving speed or track of the vehicle.

In a specific implementation, the first information includes at least one of the following: the distance between the vehicle and the charging station, the estimated time for the vehicle to arrive at the charging station, a type of each charging pile in the charging station, a power of each charging pile in the charging station, a rated current of each charging pile in the charging station, and a maximum voltage and a minimum voltage of each charging pile in the charging station.

In a specific implementation, the remaining state of charge of the battery is determined based on the state of charge of the battery, energy consumption information of the vehicle under different road conditions and at different vehicle speeds, and driving habit information of the user.

In this embodiment of this application, the remaining state of charge of the battery when the vehicle is navigated to a target charging station and arrives at the charging station can be more accurately calculated, based on the energy consumption information of the vehicle under different road conditions and at different vehicle speeds, and the driving habit information of the user. The temperature adjustment can be more accurate based on the accurate calculation.

In a specific implementation, the map application is configured to send the first information in response to a first operation. The first operation is an operation that the user sets the map application to navigate to the charging station or pass by the charging station.

According to a fifth aspect, an embodiment of this application provides an electronic apparatus. The electronic apparatus includes one or more processors and a memory. The memory stores code. When the code is executed by the processor, the electronic apparatus is enabled to perform the method according to the first aspect, or the electronic apparatus is enabled to perform the method according to the second aspect.

According to a sixth aspect, an embodiment of this application provides a communication system. The communication system includes one or more electronic apparatuses and a server. When computer instructions are run on the electronic apparatus, the electronic apparatus is enabled to perform the method according to the first aspect, or the electronic apparatus is enabled to perform the method according to the second aspect.

According to a seventh aspect, an embodiment of this application provides a vehicle. The vehicle includes a processor and a memory. The memory is coupled to the processor. The memory stores computer program code. The computer program code includes computer instructions. When the processor reads the computer instructions from the memory, the vehicle is enabled to perform the method according to the first aspect, or the electronic apparatus is enabled to perform the method according to the second aspect.

According to an eighth aspect, an embodiment of this application provides a computer-readable storage medium, including computer instructions. When the computer instructions are run on an electronic apparatus, the electronic apparatus is enabled to perform the method according to the first aspect, or the electronic apparatus is enabled to perform the method according to the second aspect.

According to a ninth aspect, an embodiment of this application provides a computer program product, including computer instructions. When the computer instructions are run on an electronic apparatus, the electronic apparatus is enabled to perform the method according to the first aspect, or the electronic apparatus is enabled to perform the method according to the second aspect.

According to a tenth aspect, an embodiment of this application provides a chip system, including one or more processors. When the one or more processors execute instructions, the one or more processors perform the method according to the first aspect, or the one or more processors perform the method according to the second aspect.

For specific implementations and corresponding technical effects of the embodiments in the second aspect to the tenth aspect, refer to specific implementations and technical effects of the first aspect.

In embodiments of this application, the temperature of the battery is adjusted before the vehicle arrives at the charging station, so that the temperature of the battery reaches the target temperature when the vehicle arrives at the charging station. In this way, the time for adjusting the temperature of the battery is effectively reduced, the vehicle can be charged at an optimal charging rate when arriving at the charging station, and the charging rate of the battery is effectively increased, thereby improving user charging experience.

### BRIEF DESCRIPTION OF DRAWINGS

FIG. 1A is a functional block diagram of a new energy vehicle;
FIG. 1B is a functional block diagram of a new energy vehicle according to an embodiment of this application;
FIG. 2 is a diagram of a structure of a communication system according to an embodiment of this application;
FIG. 3 is a schematic flowchart of an adjustment method according to an embodiment of this application;

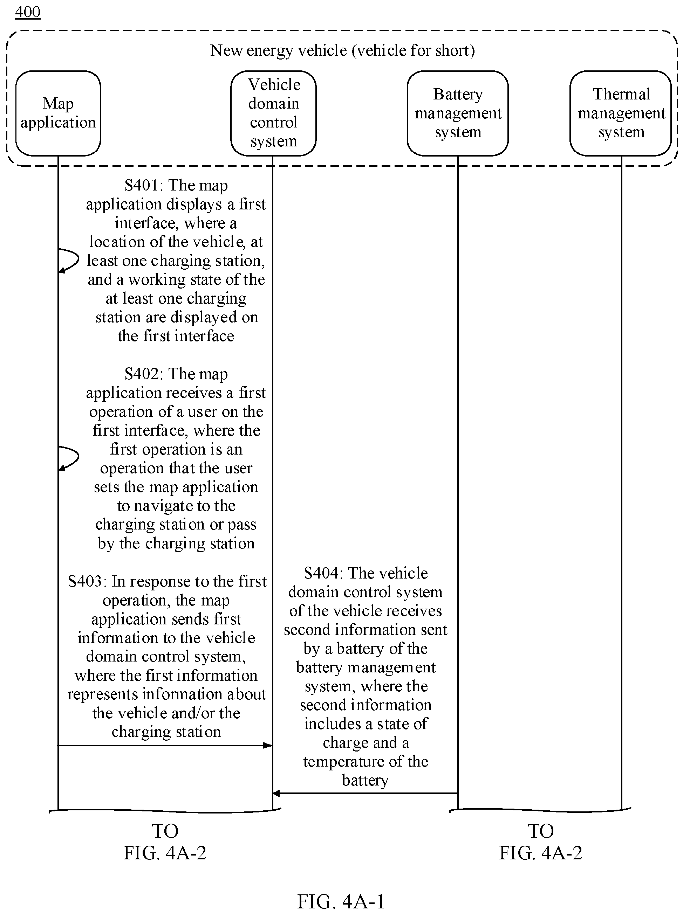

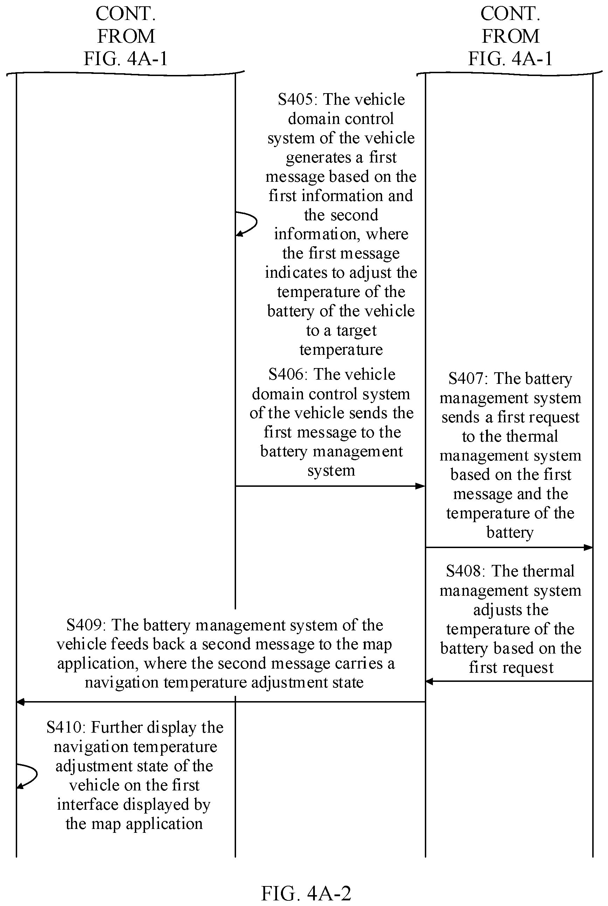

FIG. 4A-1 and FIG. 4A-2 are a schematic flowchart of an adjustment method according to an embodiment of this application;

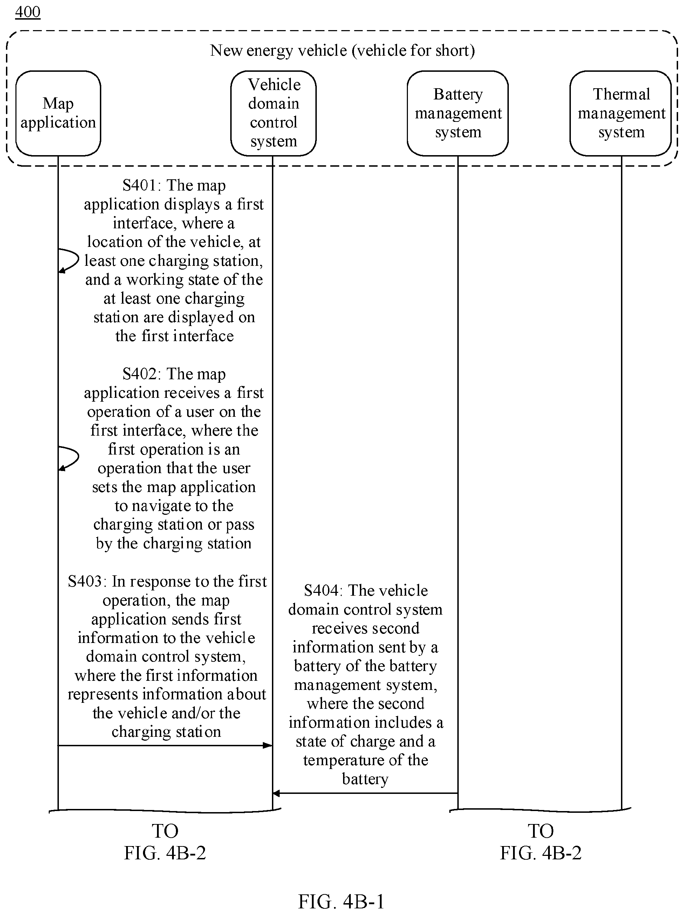

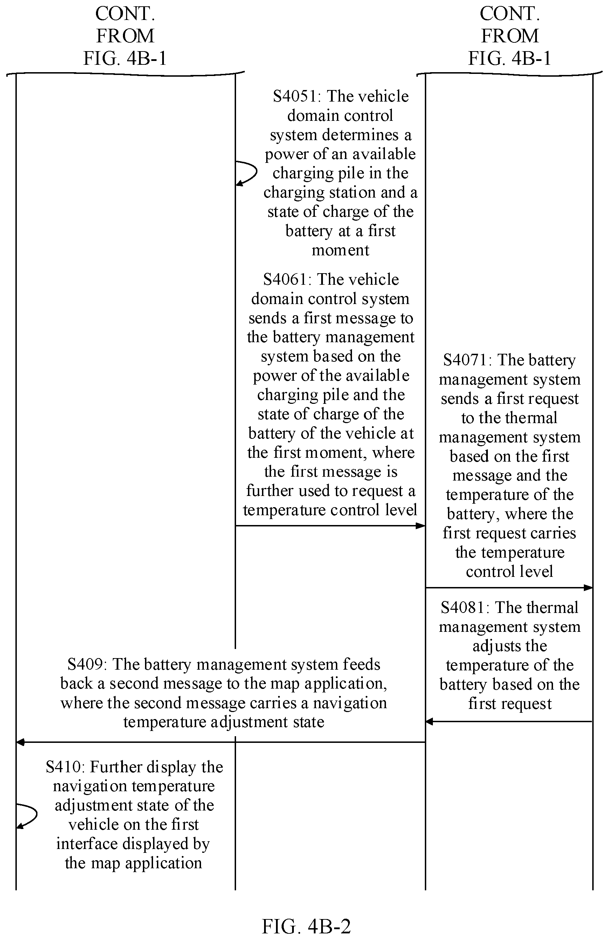

FIG. 4B-1 and FIG. 4B-2 are a schematic flowchart of an adjustment method according to an embodiment of this application;

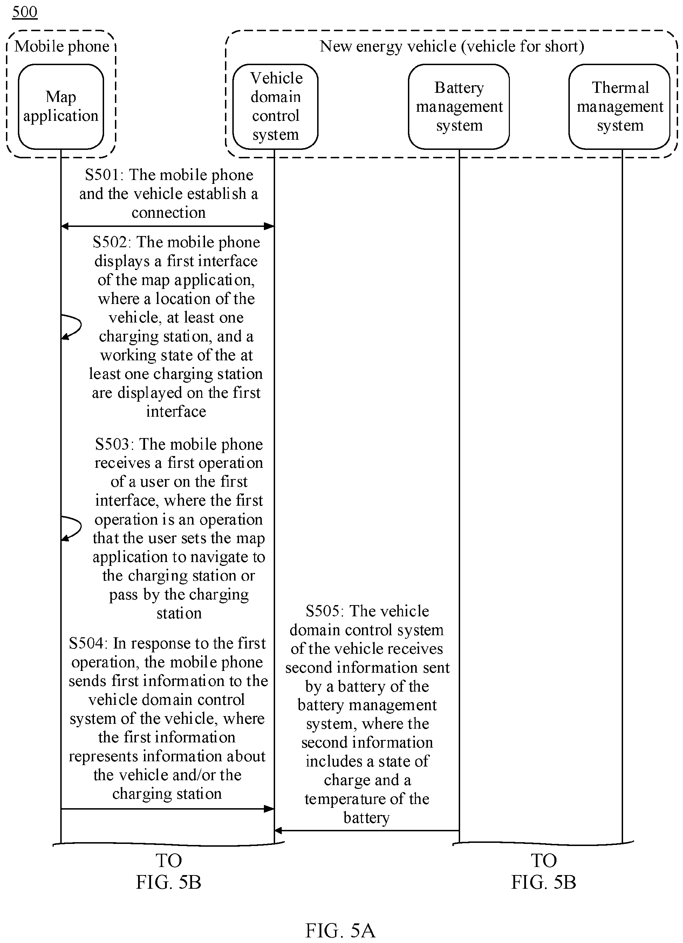

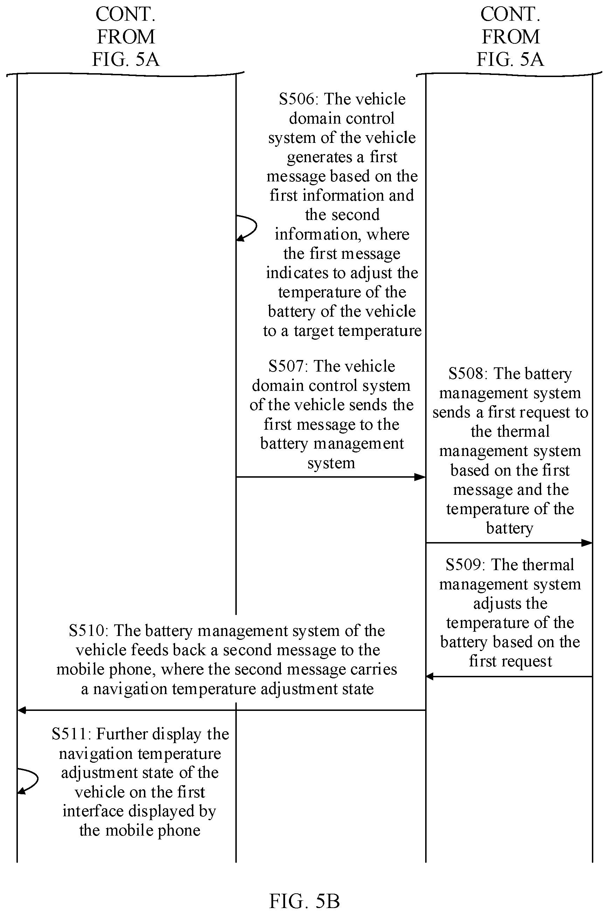

FIG. 5A and FIG. 5B are a schematic flowchart of an adjustment method according to an embodiment of this application;

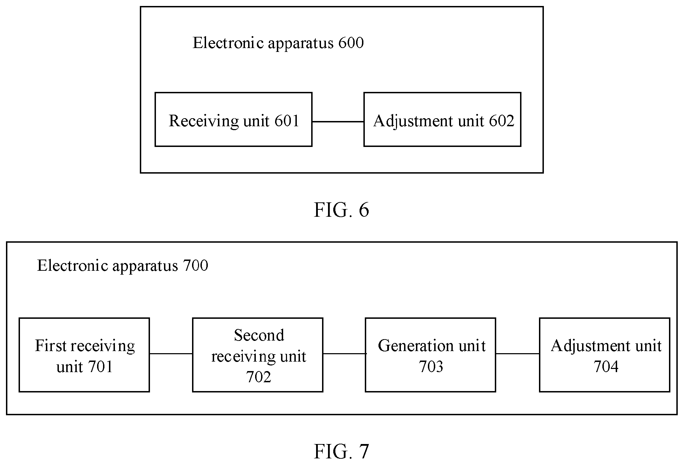

FIG. 6 is a diagram of a structure of an electronic apparatus according to an embodiment of this application; and
FIG. 7 is a diagram of a structure of an electronic apparatus according to an embodiment of this application.

### DESCRIPTION OF EMBODIMENTS

A charging rate of a new energy vehicle depends on a charging rate of a battery, and the charging rate of the battery is related to a temperature of the battery. Usually, the charging rate is high when the temperature of the battery is 25°C to 40°C. For example, when the battery is at a normal temperature of 25°C, it takes A minutes for the battery to be charged to a capacity of 50%. When the battery is at a low temperature of -10°C, it takes 6*A minutes for the battery to be charged to the capacity of 50%. Therefore, the temperature of the battery needs to be adjusted to increase the charging rate of the battery.

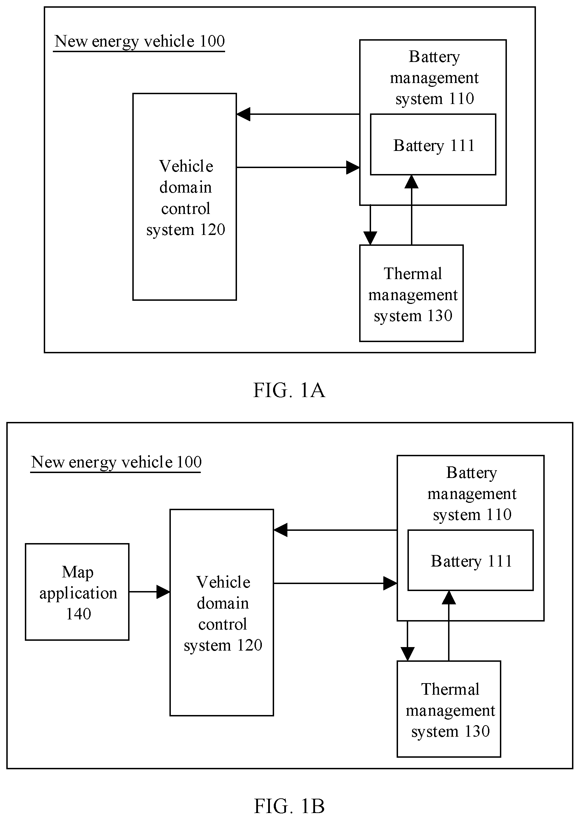

In one case of adjusting the temperature of the battery, FIG. 1A is a functional block diagram of a new energy vehicle 100. The new energy vehicle 100 may include a battery management system (battery management system, BMS) 110, a vehicle domain control (vehicle domain control, VDC) system 120, and a thermal management system 130. The battery management system 110 may include a battery 111. The thermal management system 130 is configured to adjust a temperature of an electrochemical cell of the battery. The vehicle domain control system 120 is configured to control the thermal management system to adjust the temperature of the electrochemical cell of the battery 111 in the battery management system 110.

Specifically, when the new energy vehicle is in a charging state, the battery management system or the vehicle domain control system identifies that the vehicle is in the charging state, and the temperature of the battery is less than 25°C. In this case, the vehicle domain control system controls the thermal management system to operate, to adjust the temperature of the electrochemical cell of the battery in the battery management system, so that the temperature keeps at 25°C to 40°C. However, it takes specific time to adjust the temperature of the battery. In addition, adjusting the temperature of the battery in a charging process may lead to a situation in which the temperature of the electrochemical cell of the battery is adjusted while the battery is charged. This still brings a problem of a low charging rate of the battery.

To increase the charging rate of the battery, an embodiment of this application provides an adjustment method. The method includes: receiving a first message, where the first message indicates to adjust the temperature of the battery of the vehicle to a target temperature; and adjusting the temperature of the battery of the vehicle based on the first message, to cause the temperature of the battery of the vehicle to be adjusted to the target temperature when the vehicle arrives at a charging station. In this way, the temperature of the battery is adjusted before the vehicle arrives at the charging station, reducing time for adjusting the temperature. When the vehicle arrives at the charging station, the temperature of the battery is adjusted to the target temperature, so that the vehicle can be charged at a high charging rate when arriving at the charging station. Generally, charging time of the vehicle is shortened, and the charging rate of the battery is increased, thereby improving user charging experience.

FIG. 1B is a functional block diagram of another new energy vehicle 100 according to an embodiment of this application. The new energy vehicle 100 may include the functional modules shown in FIG. 1A, and the new energy vehicle 100 may further include a map application 140. The map application 140 is configured to provide vehicle information and/or charging station information to the vehicle domain control system 120. In an embodiment, the adjustment method provided in embodiments of this application may be applied to an electronic apparatus. The electronic apparatus may include different product forms in the vehicle field, for example, a thermal management system, a vehicle domain control system, an in-vehicle chip, and an in-vehicle apparatus (for example, an in-vehicle infotainment system, an in-vehicle computing platform, a vehicle, or a server (virtual or physical)). The following describes different application scenarios in detail.

In a first application scenario, the electronic apparatus is a thermal management system.

For example, before a vehicle arrives at a charging station, the thermal management system 130 shown in FIG. 1B receives a first message. The first message indicates to adjust a temperature of a battery of the vehicle to a target temperature when the vehicle arrives at the charging station. The target temperature may be 25°C to 40°C. The thermal management system adjusts the temperature of the battery of the vehicle based on the first message, to cause the temperature of the battery of the vehicle to be adjusted to the target temperature when the vehicle arrives at the charging station.

The first message may be sent by the battery management system 110 of the new energy vehicle 100 shown in FIG. 1B to the thermal management system 130, or may be sent by the vehicle domain control system 120 of the new energy vehicle 100 shown in FIG. 1B to the thermal management system 130, or may be sent by another apparatus (namely, a device other than the new energy vehicle, such as a mobile phone or a server) to the thermal management system. Details are described in the following.

In a first case, the battery management system sends the first message to the thermal management system.

Before the vehicle arrives at the charging station, the vehicle domain control system 120 shown in FIG. 1B obtains information such as a distance between the vehicle and the charging station, estimated time for the vehicle to arrive at the charging station, each charging pile in the charging station and a power of each charging pile, a current of the charging pile in the charging station, a voltage of the charging pile in the charging station, and a state of charge of the battery of the vehicle after the vehicle arrives at the charging station. Specifically, the map application 140 shown in FIG. 1B sends the vehicle information and/or the charging station information to the vehicle domain control system 120. The vehicle domain control system determines, based on the foregoing information, whether a first condition is met. The first condition includes at least one of the following: The distance between the vehicle and the charging station is less than or equal to a first threshold, and/or the estimated time for the vehicle to arrive at the charging station is less than or equal to a second threshold; a power of a target charging pile in the charging station is greater than a third threshold, and/or a current of the target charging pile is greater than or equal to a fourth threshold, and/or a voltage of the target charging pile is greater than or equal to a sixth threshold; and a remaining state of charge of the battery of the vehicle after the vehicle arrives at the charging station is greater than a fifth threshold. If the first condition is met, the vehicle domain control system allows the temperature of the electric battery to be adjusted, and controls the battery management system 110 shown in FIG. 1B to send the first message to the thermal management system 130. The first message may be a temperature adjustment request, and the request is used to request the thermal management system to adjust the temperature of the electric battery.

In a second case, the vehicle domain control system sends the first message to the thermal management system.

Different from the first case, before the vehicle arrives at the charging station and after the vehicle domain control system 120 shown in FIG. 1B determines that the first condition is met, the vehicle domain control system 120 allows the temperature of the electric battery to be adjusted, and sends the first message to the thermal management system 130. The first message may be indication information, and the indication information indicates the thermal management system to adjust the temperature of the electric battery 111.

In a third case, the another apparatus sends the first message to the thermal management system.

Different from the first case, the another apparatus replaces the vehicle domain control system. Specifically, before the vehicle arrives at the charging station, the another apparatus obtains information such as a distance between the vehicle and the charging station, estimated time for the vehicle to arrive at the charging station, each charging pile in the charging station and a power of each charging pile, a current of the charging pile in the charging station, a voltage of the charging pile in the charging station, and a state of charge of the battery of the vehicle after the vehicle arrives at the charging station. The another apparatus determines, based on the foregoing information, whether a first condition is met. The first condition includes at least one of the following: The distance between the vehicle and the charging station is less than or equal to a first threshold, and/or the estimated time for the vehicle to arrive at the charging station is less than or equal to a second threshold; a power of a target charging pile in the charging station is greater than a third threshold, and/or a current of the target charging pile is greater than or equal to a fourth threshold, and/or a voltage of the target charging pile is greater than or equal to a sixth threshold; and a remaining state of charge of the battery of the vehicle after the vehicle arrives at the charging station is greater than a fifth threshold. If the first condition is met, the another apparatus allows the temperature of the electric battery to be adjusted, and sends the first message to the thermal management system. The first message may be indication information, and the indication information indicates the thermal management system to adjust the temperature of the electric battery.

In a second application scenario, the electronic apparatus is a vehicle or a vehicle domain control system.

The following uses an example in which the electronic apparatus is the vehicle domain control system for description.

For example, before a vehicle arrives at a charging station, the vehicle domain control system 120 shown in FIG. 1B receives a first message. The first message indicates to adjust a temperature of a battery of the vehicle to a target temperature when the vehicle arrives at the charging station. The target temperature is 25°C to 40°C. The vehicle domain control system 120 controls, based on the first message, the thermal management system 130 to adjust the temperature of the battery of the vehicle, to cause the temperature of the battery 111 of the vehicle to be adjusted to the target temperature when the vehicle arrives at the charging station.

The first message may be sent by another apparatus (namely, a device other than the new energy vehicle, such as a mobile phone or a server) to the vehicle domain control system. The first message may be of an indication type or a content type. The indication type may be understood as a type such as an indication or an instruction. For example, the first message may be indication information, a request, or the like. The content type may be understood as a type such as content. For example, the first message may be vehicle information, charging station information, and/or the like.

The following describes different message types in detail.

In a first case, the first message is of the content type.

Before the vehicle arrives at the charging station, the vehicle domain control system 120 shown in FIG. 1B receives the first message. The first message may include information such as a distance between the vehicle and the charging station, estimated time for the vehicle to arrive at the charging station, each charging pile in the charging station and a power of each charging pile, a current of the charging pile in the charging station, a voltage of the charging pile in the charging station, and a state of charge of the battery of the vehicle after the vehicle arrives at the charging station. The vehicle domain control system determines, based on the foregoing information, whether a first condition is met. The first condition includes at least one of the following: The distance between the vehicle and the charging station is less than or equal to a first threshold, and/or the estimated time for the vehicle to arrive at the charging station is less than or equal to a second threshold; a power of a target charging pile in the charging station is greater than a third threshold, and/or a current of the target charging pile is greater than or equal to a fourth threshold, and/or a voltage of the target charging pile is greater than or equal to a sixth threshold; and a remaining state of charge of the battery of the vehicle after the vehicle arrives at the charging station is greater than a fifth threshold. If the first condition is met, the vehicle domain control system allows the temperature of the electric battery to be adjusted, and indicates the thermal management system to adjust the temperature of the electric battery.

In a second case, the first message is of the indication type.

Before the vehicle arrives at the charging station, the vehicle domain control system 120 shown in FIG. 1B receives the first message. The vehicle domain control system 120 allows, based on the first message, the temperature of the electric battery 111 to be adjusted, and indicates the thermal management system 130 to adjust the temperature of the electric battery 111.

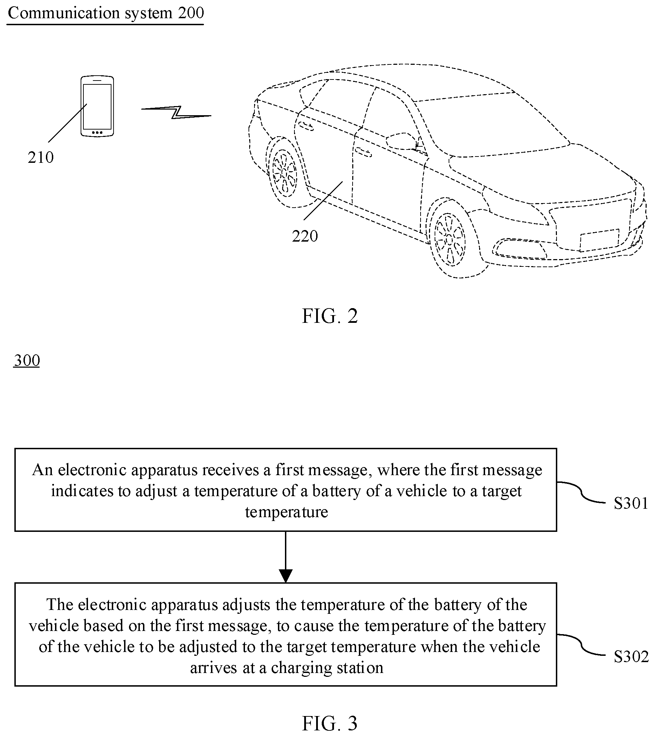

In another embodiment, the adjustment method provided in embodiments of this application may be applied to a communication system including two electronic apparatuses. FIG. 2 is a diagram of a structure of the communication system. As shown in FIG. 2, the system 200 may further include a first electronic apparatus 210 and a second electronic apparatus 220. The first electronic apparatus 210 may send a first message to the second electronic apparatus 220. The first message may be the related message described above. The second electronic apparatus 220 receives the first message, and adjusts the temperature of the battery of the vehicle based on the first message, to cause the temperature of the battery of the vehicle to be adjusted to the target temperature when the vehicle arrives at the charging station.

The first electronic apparatus 210 may be a device with a display function, such as a server, a mobile phone, a tablet computer, a desktop computer, a laptop computer, a notebook computer, an ultra-mobile personal computer (ultra-mobile personal computer, UMPC), a handheld computer, a netbook, a personal digital assistant (personal digital assistant, PDA), a wearable electronic apparatus, a television, or a virtual reality device. A specific form of the electronic apparatus is not particularly limited in embodiments of this application.

The second electronic apparatus 220 may include different product forms in the vehicle field, for example, a thermal management system, an in-vehicle chip, and an in-vehicle apparatus (for example, an in-vehicle infotainment system, an in-vehicle computing platform (for example, a vehicle domain control system), a vehicle, and a server (virtual or physical)).

The following describes in detail different scenarios to which the adjustment method provided in embodiments of this application is applied.

In a first embodiment, the adjustment method provided in this embodiment of this application is applied to an electronic apparatus. The electronic apparatus may be the thermal management system 130 shown in FIG. 1B, the vehicle domain control system 120 shown in FIG. 1B, or the new energy vehicle 100 (vehicle for short) shown in FIG. 1B.

FIG. 3 is a schematic flowchart of an adjustment method 300 according to an embodiment of this application. The method 300 may be performed by the thermal management system 130 shown in FIG. 1B, or may be performed by the vehicle domain control system 120 shown in FIG. 1B, or may be performed by the new energy vehicle 100 shown in FIG. 1B. The following uses an example in which the method is performed by the vehicle domain control system for description. The method 300 may include S301 and S302.

S301: An electronic apparatus receives a first message, where the first message indicates to adjust a temperature of a battery of a vehicle to a target temperature.

Specifically, before the vehicle arrives at a charging station, the electronic apparatus receives the first message. The first message indicates to adjust the temperature of the battery of the vehicle to the target temperature when the vehicle arrives at the charging station.

The target temperature may be a temperature of the battery at which a charging rate of the battery is the highest. The target temperature may be a specific value, or may be a value range. For example, the target temperature may be 25°C to 40°C.

The following separately describes the first message in detail from different dimensions.

### First dimension: type of the first message

The first message may be an indication message. In this case, the first message may directly indicate to adjust the temperature of the battery of the vehicle to the target temperature when the vehicle arrives at the charging station.

The first message may alternatively be a content message. In this case, the first message may indirectly indicate to adjust the temperature of the battery of the vehicle to the target temperature when the vehicle arrives at the charging station. For example, the first message may include information such as a distance between the vehicle and the charging station, estimated time for the vehicle to arrive at the charging station, each charging pile in the charging station and a power of each charging pile, a current of the charging pile in the charging station, a voltage of the charging pile in the charging station, and a state of charge of the battery of the vehicle after the vehicle arrives at the charging station.

### Second dimension: generation occasion of the first message

The generation occasion of the first message varies with a message type, which is specifically as follows.

If the first message is a content message, the first message is generated when a user sets navigation to the charging station for the vehicle, or when a route set by the user for the vehicle includes the charging station.

If the first message is an indication message, the first message is generated before the vehicle arrives at the charging station and when the vehicle and/or the charging station meet/meets a first condition. The first condition may include at least one of the following: A distance between the vehicle and the charging station is less than or equal to a first threshold, and/or estimated time for the vehicle to arrive at the charging station is less than or equal to a second threshold; a power of a target charging pile in the charging station is greater than a third threshold, and/or a current of the target charging pile is greater than or equal to a fourth threshold, and/or a voltage of the target charging pile is greater than or equal to a sixth threshold; and a remaining state of charge of the battery of the vehicle after the vehicle arrives at the charging station is greater than a fifth threshold. The first threshold, the second threshold, the third threshold, the fourth threshold, the fifth threshold, and the sixth threshold may be set based on an actual situation. This is not specifically limited herein.

S302: The electronic apparatus adjusts the temperature of the battery of the vehicle based on the first message, to cause the temperature of the battery of the vehicle to be adjusted to the target temperature when the vehicle arrives at the charging station.

In a specific implementation, the electronic apparatus identifies the temperature of the battery. The electronic apparatus compares the temperature of the battery with the target temperature. When the temperature of the battery is not equal to the target temperature, the electronic apparatus adjusts the temperature of the battery of the vehicle based on the first message.

In embodiments of this application, the temperature of the battery is adjusted before the vehicle arrives at the charging station, so that the temperature of the battery reaches the target temperature when the vehicle arrives at the charging station. In this way, time for adjusting the temperature of the battery is effectively reduced, the vehicle can be charged at an optimal charging rate when arriving at the charging station, and the charging rate of the battery is effectively increased, thereby improving user charging experience.

In some embodiments, to ensure the charging rate and reduce operating energy consumption of the thermal management system, S302 may be specifically implemented as follows: The electronic apparatus adjusts the temperature of the battery of the vehicle based on a temperature control level. The temperature control level is determined based on a power of an available charging pile and a state of charge (state of charge, SOC) of the battery of the vehicle at a first moment. The first moment may be a moment in a process in which the vehicle travels toward the charging station.

It is assumed that the charging station includes a charging pile 1, a charging pile 2, ..., and a charging pile n. Powers of these charging piles range from several kW to hundreds of kW. Therefore, different levels of thermal management may be requested based on the power of the target pile. If the power of the target pile is low, at a low temperature, the temperature of the battery of the vehicle does not need to be heated to an excessively high temperature, for example, to 5°C, so that the vehicle can be charged at a maximum charging power of the pile. If the power of the target pile is high, the temperature of the battery of the vehicle needs to be heated to a high temperature, for example, to 20°C to 25°C, so that the vehicle can be charged at a maximum charging power of the pile. It is assumed that a power of the charging pile 1 (Power 1) < a power of the charging pile 2 (Power 2) < ... < a power of the charging pile n (Power n), and SOC 1 > SOC 2 > ... > SOC n.

Therefore, a temperature control level distribution table shown in Table 1 is obtained. The table represents different temperature control levels corresponding to SOCs of different batteries of different charging piles.

**Table 1**

| | | Navigation charging pile: pile Power 1 < pile Power 2 < ... < pile Power n | | | |
|---|---|---|---|---|---|
| | | Pile Power 1 | Pile Power 2 | . . . | Pile Power n |
| Remaining SOC arranged in | SOC 1 | Level 11 | Level 12 | . . . | Level 1n |
| descending order when the vehicle arrives at a destination | SOC 2 | Level 21 | Level 22 | . . . | Level 2n |
| | . . . | . . . | . . . | . . . | . . . |
| | SOC m | Level n1 | Level n2 | . . . | Level mn |
| SOC 1 > SOC 2 > ... > SOC n | | | | | |

It can be learned from Table 1 that, if the vehicle arrives at the charging station, the pile power of the charging station is low, and the remaining SOC of the vehicle is high, for example, for the pile Power 1 and the SOC 1, a temperature control level of the Level 11 level is requested, and the electronic apparatus adjusts the temperature based on the Level 11 level, so that the temperature is adjusted to the target temperature and controlled at a low level. If the vehicle arrives at the charging station, the pile power of the charging station is high, and the remaining SOC of the vehicle is low, for example, for the pile Power n and the SOC m, a temperature control level of the Level mn level is requested, and the electronic apparatus adjusts the temperature based on the Level mn level, so that the temperature is adjusted to the target temperature and controlled at a high level.

In this embodiment of this application, different levels of temperature adjustments are implemented based on powers of different charging piles. In this way, operating energy consumption of the thermal management system is reduced while an optimal charging rate is ensured.

In a second embodiment, the adjustment method provided in this embodiment of this application is applied to the new energy vehicle (vehicle for short) shown in FIG. 1B. The vehicle may include a map application program (map application for short), a battery management system, a thermal management system, and a vehicle domain control system.

FIG. 4A-1 and FIG. 4A-2 and FIG. 4B-1 and FIG. 4B-2 are schematic flowcharts of adjustment methods according to embodiments of this application. The method 400 is an extension of the method 300. For example, the steps performed by the vehicle in the method 400 may be performed by the electronic apparatus shown in FIG. 3. It should be understood that the steps or operations of the adjustment methods shown in FIG. 4A-1 and FIG. 4A-2 and FIG. 4B-1 and FIG. 4B-2 are merely examples. In embodiments of this application, other operations or variations of the operations in FIG. 4A-1 and FIG. 4A-2 and FIG. 4B-1 and FIG. 4B-2 may further be performed. In addition, the steps in FIG. 4A-1 and FIG. 4A-2 and FIG. 4B-1 and FIG. 4B-2 may be performed in a sequence different from that presented in FIG. 4A-1 and FIG. 4A-2 and FIG. 4B-1 and FIG. 4B-2, and not all operations in FIG. 4A-1 and FIG. 4A-2 and FIG. 4B-1 and FIG. 4B-2 may need to be performed.

As shown in FIG. 4A-1 and FIG. 4A-2 and FIG. 4B-1 and FIG. 4B-2, the method 400 may include S401 to S410.

S401: The map application of the vehicle displays a first interface, where a location of the vehicle, at least one charging station, and a working state of the at least one charging station are displayed on the first interface.

The working state of the charging station may be understood as a state of each charging pile in the charging station. For example, the charging pile in the charging station is in a used state, or the charging pile in the charging station is in an unused state.

S402: The map application of the vehicle receives a first operation of the user on the first interface, where the first operation is an operation that the user sets the map application to navigate to the charging station or pass by the charging station.

The first operation may include an operation that the user sets the map application to navigate to the charging station, or an operation that the user sets the map application to pass by the charging station.

S403: In response to the first operation, the map application of the vehicle sends first information to the vehicle domain control system of the vehicle, where the first information represents information about the vehicle and/or the charging station; and correspondingly, the vehicle domain control system of the vehicle receives the first information.

The first information may include at least one of the following: a distance between the vehicle and the charging station, estimated time for the vehicle to arrive at the charging station, a type of each charging pile in the charging station, a power of each charging pile in the charging station, a rated current of each charging pile in the charging station, and a maximum voltage and a minimum voltage of each charging pile in the charging station.

S404: The vehicle domain control system of the vehicle receives second information sent by a battery of the battery management system, where the second information includes a state of charge and a temperature of the battery.

S405: The vehicle domain control system of the vehicle generates a first message based on the first information and the second information, where the first message indicates to adjust the temperature of the battery of the vehicle to a target temperature.

The adjusting the temperature of the battery of the vehicle to the target temperature may be understood as follows. An electrochemical cell of the battery of the vehicle is heated, so that the temperature is increased to the target temperature. For example, if the target temperature is 25°C to 40°C, and the temperature of the battery is 10°C, the electrochemical cell of the battery of the vehicle is heated. Alternatively, the electrochemical cell of the battery of the vehicle is cooled, so that the temperature is reduced to the target temperature. For example, if the target temperature is 25°C to 40°C, and the temperature of the battery is 50°C, the electrochemical cell of the battery of the vehicle is cooled.

In a specific implementation, the vehicle domain control system of the vehicle determines, based on the state of charge of the battery, energy consumption information of the vehicle under different road conditions and at different vehicle speeds, and driving habit information of the user, a remaining state of charge of the battery when the vehicle arrives at the charging station. The vehicle domain control system of the vehicle determines, based on the remaining state of charge of the battery when the vehicle arrives at the charging station, the distance between the vehicle and the charging station, the estimated time for the vehicle to arrive at the charging station, the type of each charging pile in the charging station, the power of each charging pile in the charging station, the rated current of each charging pile in the charging station, and the maximum voltage and the minimum voltage of each charging pile in the charging station, whether the vehicle and/or the charging station meet/meets a first condition. The first condition may include at least one of the following: The distance between the vehicle and the charging station is less than or equal to a first threshold, and/or the estimated time for the vehicle to arrive at the charging station is less than or equal to a second threshold; a power of a target charging pile in the charging station is greater than a third threshold, and/or a current of the target charging pile is greater than or equal to a fourth threshold, and/or a voltage of the target charging pile is greater than or equal to a sixth threshold; and the remaining state of charge of the battery of the vehicle after the vehicle arrives at the charging station is greater than a fifth threshold. If the first condition is met, the vehicle generates the first message. If the first condition is not met, the vehicle does not generate the first message.

S406: The vehicle domain control system of the vehicle sends the first message to the battery management system, and correspondingly, the battery management system receives the first message.

S407: The battery management system sends a first request to the thermal management system based on the first message and the temperature of the battery, where the first request is used to request a thermal management component to adjust the temperature of the battery of the vehicle; and correspondingly, the thermal management system receives the first request.

In a specific implementation, after the battery management system receives the first message, the battery management system determines whether the temperature of the battery is equal to the target temperature. The battery management system determines that the temperature of the battery is not equal to the target temperature. In this case, the battery management system sends the first request to the thermal management system.

S408: The thermal management system adjusts the temperature of the battery based on the first request.

In a specific implementation, S406 to S408 may be changed to the following. The vehicle domain control system of the vehicle sends the first message to the thermal management system of the vehicle. The thermal management system is configured to adjust the temperature of the battery of the vehicle based on the first message.

S409: The battery management system of the vehicle feeds back a second message to the map application, where the second message carries a navigation temperature adjustment state; and correspondingly, the map application receives the second message.

The navigation temperature adjustment state indicates that the vehicle is in a battery heating state in a process of navigating to the charging station. For example, the navigation temperature adjustment state may include a navigation heating state and a navigation cooling state.

S410: Further display the navigation temperature adjustment state of the vehicle on the first interface displayed by the map application.

As described above, the navigation temperature adjustment state may include the navigation heating state and the navigation cooling state. For example, the navigation temperature adjustment state is the navigation heating state. In a process of preheating an electric battery, the navigation heating state may be displayed on the first interface in a text form, for example, "smart preheating!". When the electric battery preheating is completed, the navigation heating state may be displayed on the first interface as "smart preheating completed".

In embodiments of this application, the temperature of the battery is adjusted before the vehicle arrives at the charging station, so that the temperature of the battery reaches the target temperature when the vehicle arrives at the charging station. In this way, the time for adjusting the temperature of the battery is effectively reduced, the vehicle can be charged at an optimal charging rate when arriving at the charging station, and the charging rate of the battery is effectively increased, thereby improving user charging experience.

In some embodiments, to reduce operating energy consumption of the thermal management system while ensuring the charging rate, S405 may be specifically: S4051: The vehicle domain control system of the vehicle determines a power of an available charging pile in the charging station and a state of charge of the battery of the vehicle at a first moment. S406 may be specifically: S4061: The vehicle domain control system of the vehicle sends the first message to the battery management system based on the power of the available charging pile and the state of charge of the battery of the vehicle at the first moment, where the first message is further used to request a temperature control level. S407 may be specifically: S4071: The battery management system sends the first request to the thermal management system based on the first message and the temperature of the battery, where the first request carries the temperature control level. S408 may be specifically: S4081: The thermal management system adjusts the temperature of the battery based on the first request.

In another specific implementation, as shown in FIG. 4B-1 and FIG. 4B-2, S4061 to S4081 may be as follows. The vehicle domain control system of the vehicle determines the temperature control level based on the power of the available charging pile and the state of charge of the battery of the vehicle at the first moment. The vehicle domain control system of the vehicle sends the first message to the battery management system, where the first message carries the temperature control level. The battery management system sends the first request to the thermal management system based on the first message and the temperature of the battery, where the first request carries the temperature control level. The thermal management system adjusts the temperature of the battery based on the first request.

In this embodiment of this application, different temperature control levels of temperature adjustments are implemented based on powers of different charging piles and the state of charge of the battery. The temperature control level can be flexibly adjusted based on the available charging pile and the state of charge of the battery. In this way, operating energy consumption of the thermal management system is reduced while an optimal charging rate is ensured.

In a third embodiment, the adjustment method provided in this embodiment of this application is applied to the communication system shown in FIG. 2. The communication system may include a first electronic apparatus and a second electronic apparatus. The first electronic apparatus may include a map application program (map application for short), and the second electronic apparatus may include a battery management system, a thermal management system, and a vehicle domain control system. For example, the first electronic apparatus is a mobile phone, and the second electronic apparatus is a vehicle.

FIG. 5A and FIG. 5B are a schematic flowchart of an adjustment method according to an embodiment of this application. The method 500 is an extension of the method 300. For example, the steps performed by the vehicle and/or the mobile phone in the method 500 may be performed by the electronic apparatus shown in FIG. 3. It should be understood that the steps or operations of the adjustment method shown in FIG. 5A and FIG. 5B are merely examples. In embodiments of this application, other operations or variations of the operations in FIG. 5A and FIG. 5B may further be performed. In addition, the steps in FIG. 5A and FIG. 5B may be performed in a sequence different from that presented in FIG. 5A and FIG. 5B, and not all operations in FIG. 5A and FIG. 5B may need to be performed.

As shown in FIG. 5A and FIG. 5B, the method 500 may include S501 to S511.

S501: The mobile phone and the vehicle establish a connection.

The mobile phone and the vehicle may establish a connection in the following manners. I: The mobile phone and the vehicle establish a communication connection. For example, the mobile phone and the vehicle are connected to a same local area network. II: A data connection is performed between the mobile phone and the vehicle. For example, a Bluetooth connection is performed between the mobile phone and the vehicle. Certainly, the mobile phone and the vehicle may be connected in another manner. This is not enumerated herein.

S502: The mobile phone displays a first interface of a map application, where a location of the vehicle, at least one charging station, and a working state of the at least one charging station are displayed on the first interface.

The working state of the charging station may be understood as a state of each charging pile in the charging station. For example, the charging pile in the charging station is in a used state, or the charging pile in the charging station is in an unused state.

S503: The mobile phone receives a first operation of a user on the first interface, where the first operation is an operation that the user sets the map application to navigate to the charging station or pass by the charging station.

The first operation may include an operation that the user sets the map application to navigate to the charging station, or an operation that the user sets the map application to pass by the charging station.

S504: In response to the first operation, the mobile phone sends first information to a vehicle domain control system of the vehicle, where the first information represents information about the vehicle and/or the charging station; and correspondingly, the vehicle domain control system of the vehicle receives the first information.

The first information may include at least one of the following: a distance between the vehicle and the charging station, estimated time for the vehicle to arrive at the charging station, a type of each charging pile in the charging station, a power of each charging pile in the charging station, a rated current of each charging pile in the charging station, and a maximum voltage and a minimum voltage of each charging pile in the charging station.

S505: The vehicle domain control system of the vehicle receives second information sent by a battery of a battery management system, where the second information includes a state of charge and a temperature of the battery.

S506: The vehicle domain control system of the vehicle generates a first message based on the first information and the second information, where the first message indicates to adjust the temperature of the battery of the vehicle to a target temperature when the vehicle arrives at the charging station.

S507: The vehicle domain control system of the vehicle sends the first message to the battery management system, and correspondingly, the battery management system receives the first message.

S508: The battery management system sends a first request to a thermal management system based on the first message and the temperature of the battery, where the first request is used to request a thermal management component to adjust the temperature of the battery of the vehicle; and correspondingly, the thermal management system receives the first request.

S509: The thermal management system adjusts the temperature of the battery based on the first request.

For specific implementations of the steps in S505 to S509, refer to the implementations of the steps in S404 to S408. Details are not described herein again.

S510: The battery management system of the vehicle feeds back a second message to the mobile phone, where the second message carries a navigation temperature adjustment state; and correspondingly, the mobile phone receives the second message.

The navigation temperature adjustment state indicates that the vehicle is in a battery heating state in a process of navigating to the charging station. For example, the navigation temperature adjustment state may include a navigation heating state and a navigation cooling state.

S511: Further display the navigation temperature adjustment state of the vehicle on the first interface displayed by the mobile phone.

In embodiments of this application, the temperature of the battery is adjusted before the vehicle arrives at the charging station, so that the temperature of the battery reaches the target temperature when the vehicle arrives at the charging station. In this way, the time for adjusting the temperature of the battery is effectively reduced, the vehicle can be charged at an optimal charging rate when arriving at the charging station, and a charging rate of the battery is effectively increased, thereby improving user charging experience.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

An embodiment of this application further provides an apparatus configured to implement any one of the foregoing methods, for example, provides an apparatus including units (or means) configured to implement the steps performed by the electronic apparatus in any one of the foregoing methods. For another example, another apparatus is further provided, including units (or means) configured to implement the steps performed by the vehicle in any one of the foregoing methods.

For example, FIG. 6 is a diagram of an electronic apparatus according to an embodiment of this application. The apparatus 600 may include the following.

A receiving unit 601 is configured to receive a first message. The first message indicates to adjust a temperature of a battery of a vehicle to a target temperature. For example, the receiving unit 601 may perform the foregoing step S301. The receiving unit 601 may be the vehicle domain control system 120 shown in FIG. 1B. Alternatively, the receiving unit 601 may be the thermal management system 130 shown in FIG. 1B.

An adjustment unit 602 is configured to adjust the temperature of the battery of the vehicle based on the first message, to cause the temperature of the battery of the vehicle to be adjusted to the target temperature when the vehicle arrives at a charging station. For example, the adjustment unit 602 may perform the foregoing step S302. The adjustment unit 602 may be the vehicle domain control system 120 shown in FIG. 1B. Alternatively, the receiving unit 601 may be the thermal management system 130 shown in FIG. 1B.

In embodiments of this application, the temperature of the battery is adjusted before the vehicle arrives at the charging station, so that the temperature of the battery reaches the target temperature when the vehicle arrives at the charging station. In this way, the time for adjusting the temperature of the battery is effectively reduced, the vehicle can be charged at an optimal charging rate when arriving at the charging station, and a charging rate of the battery is effectively increased, thereby improving user charging experience.

In a specific implementation, the first message is generated before the vehicle arrives at the charging station and when a first condition is met.

In a specific implementation, the first condition includes at least one of the following: A distance between the vehicle and the charging station is less than or equal to a first threshold, and/or estimated time for the vehicle to arrive at the charging station is less than or equal to a second threshold; a power of a target charging pile in the charging station is greater than a third threshold, and/or a current of the target charging pile is greater than or equal to a fourth threshold, and/or a voltage of the target charging pile is greater than or equal to a sixth threshold; and a remaining state of charge of the battery of the vehicle after the vehicle arrives at the charging station is greater than a fifth threshold.

In a specific implementation, the adjustment unit 602 is specifically configured to: when the temperature of the battery is not equal to the target temperature, adjust the temperature of the battery of the vehicle based on the first message.

In a specific implementation, the adjustment unit 602 is specifically configured to: adjust the temperature of the battery of the vehicle based on a temperature control level. The temperature control level is determined based on a power of an available charging pile and a state of charge of the battery of the vehicle at a first moment.

In this embodiment of this application, different levels of temperature adjustments are implemented based on powers of different charging piles. In this way, operating energy consumption of a thermal management system is reduced while an optimal charging rate is ensured.

An embodiment of this application further provides a communication system configured to implement any one of the foregoing methods, for example, provides a communication system including units (or means) configured to implement the steps performed by the electronic apparatus in any one of the foregoing methods. For another example, another communication system is further provided, including units (or means) configured to implement the steps performed by the vehicle in any one of the foregoing methods.

For example, FIG. 7 is a diagram of an electronic apparatus according to an embodiment of this application. The apparatus 700 may include the following.

A first receiving unit 701 is configured to receive first information sent by a map application. The first information represents information about a vehicle and/or a charging station. For example, the first receiving unit 701 may perform the foregoing steps S403 and S504. The first receiving unit 701 may be the vehicle domain control system shown in FIG. 4A-1 and FIG. 4A-2, FIG. 4B-1 and FIG. 4B-2, and FIG. 5A and FIG. 5B.

A second receiving unit 702 is configured to receive second information sent by a battery management system. The second information includes a state of charge and a temperature of a battery. For example, the second receiving unit 702 may perform the foregoing steps S404 and S505. The second receiving unit 702 may be the vehicle domain control system shown in FIG. 4A-1 and FIG. 4A-2, FIG. 4B-1 and FIG. 4B-2, and FIG. 5A and FIG. 5B.

A generation unit 703 is configured to generate a first message based on the first information and the second information. The first message indicates to adjust the temperature of the battery of the vehicle to a target temperature when the vehicle arrives at the charging station. For example, the generation unit 703 may perform the foregoing steps S405 and S506. The generation unit 703 may be the vehicle domain control system shown in FIG. 4A-1 and FIG. 4A-2, FIG. 4B-1 and FIG. 4B-2, and FIG. 5A and FIG. 5B.

An adjustment unit 704 is configured to control, based on the first message, a thermal management system to adjust the temperature of the battery of the vehicle, to cause the temperature of the battery of the vehicle to be adjusted to the target temperature when the vehicle arrives at the charging station. For example, the adjustment unit 704 may perform the foregoing steps S406 to S408 and S507 to S509. The adjustment unit 704 may be the vehicle domain control system shown in FIG. 4A-1 and FIG. 4A-2, FIG. 4B-1 and FIG. 4B-2, and FIG. 5A and FIG. 5B.

In a specific implementation, the adjustment unit 704 is configured to send the first message to the thermal management system. The thermal management system is configured to adjust the temperature of the battery of the vehicle based on the first message.

In a specific implementation, the adjustment unit 704 is configured to send the first message to the battery management system. The battery management system is configured to send a first request to the thermal management system based on the first message and the temperature of the battery, and the first request is used to request the thermal management system to adjust the temperature of the battery of the vehicle.

In a specific implementation, the first message is generated before the vehicle arrives at the charging station and when a first condition is met.

In a specific implementation, the first condition includes at least one of the following: A distance between the vehicle and the charging station is less than or equal to a first threshold, and/or estimated time for the vehicle to arrive at the charging station is less than or equal to a second threshold; a power of a target charging pile in the charging station is greater than a third threshold, and/or a current of the target charging pile is greater than or equal to a fourth threshold, and/or a voltage of the target charging pile is greater than or equal to a sixth threshold; and a remaining state of charge of the battery of the vehicle after the vehicle arrives at the charging station is greater than a fifth threshold.

In a specific implementation, the adjustment unit 704 is configured to: when it is determined that the temperature of the battery is not equal to the target temperature, control, based on the first message, the thermal management system to adjust the temperature of the battery of the vehicle.

In a specific implementation, the adjustment unit 704 is configured to: determine a power of an available charging pile in the charging station and a state of charge of the battery of the vehicle at a first moment; determine a temperature control level based on the power of the available charging pile and the state of charge of the battery of the vehicle at the first moment; and adjust the temperature of the battery of the vehicle based on the temperature control level.

In a specific implementation, a location of the vehicle, at least one charging station, and a working state of the at least one charging station are displayed on a first interface of the map application.

In a specific implementation, a navigation temperature adjustment state of the vehicle is further displayed on the first interface of the map application, and the navigation heating state indicates that the vehicle is in a temperature adjustment state in a process of navigating to the charging station.

In a specific implementation, the first information includes at least one of the following: the distance between the vehicle and the charging station, the estimated time for the vehicle to arrive at the charging station, a type of each charging pile in the charging station, a power of each charging pile in the charging station, a rated current of each charging pile in the charging station, and a maximum voltage and a minimum voltage of each charging pile in the charging station.

In a specific implementation, the remaining state of charge of the battery is determined based on the state of charge of the battery, energy consumption information of the vehicle under different road conditions and at different vehicle speeds, and driving habit information of a user.

In a specific implementation, the map application is configured to send the first information in response to a first operation. The first operation is an operation that the user sets the map application to navigate to the charging station or pass by the charging station.

In embodiments of this application, the temperature of the battery is adjusted before the vehicle arrives at the charging station, so that the temperature of the battery reaches the target temperature when the vehicle arrives at the charging station. In this way, the time for adjusting the temperature of the battery is effectively reduced, the vehicle can be charged at an optimal charging rate when arriving at the charging station, and a charging rate of the battery is effectively increased, thereby improving user charging experience.

An embodiment of this application further provides an apparatus. The apparatus includes a processing unit and a storage module. The storage module is configured to store instructions, and the processing unit executes the instructions stored in the storage module, so that the apparatus performs the methods or steps performed in the foregoing embodiments.

It should be understood that division of units in the apparatus is merely logical function division. During actual implementation, all or some of the units may be integrated into one physical entity or may be physically separated. In addition, the unit in the apparatus may be implemented in a form in which a processor invokes software. For example, the apparatus includes a processor, the processor is connected to a memory, the memory stores instructions, and the processor invokes the instructions stored in the memory, to implement any one of the foregoing methods or functions of the units in the apparatus. The processor is, for example, a general-purpose processor, such as a CPU or a microprocessor, and the memory is a memory inside the apparatus or a memory outside the apparatus. Alternatively, the unit in the apparatus may be implemented in a form of a hardware circuit, and functions of some or all of the units may be implemented by designing the hardware circuit. The hardware circuit may be understood as one or more processors. For example, in an implementation, the hardware circuit is an ASIC, and the functions of some or all of the units are implemented by designing a logical relationship between elements in the circuit. For another example, in another implementation, the hardware circuit may be implemented by using a PLD. An FPGA is used as an example. The FPGA may include a large quantity of logic gate circuits, and a connection relationship between the logic gate circuits is configured by using a configuration file, to implement the functions of some or all of the units. All of the units in the apparatus may be implemented in a form in which a processor invokes software, or may be implemented in a form of a hardware circuit. Alternatively, some of the units are implemented in a form in which a processor invokes software, and the remaining part of the units are implemented in a form of a hardware circuit.

In this embodiment of this application, the processor is a circuit having a signal processing capability. In an implementation, the processor may be a circuit having an instruction reading and executing capability, for example, a CPU, a microprocessor, a GPU, or a DSP. In another implementation, the processor may implement a specific function by using a logical relationship of the hardware circuit, and the logical relationship of the hardware circuit is fixed or reconfigurable. For example, the processor is a hardware circuit implemented by an ASIC or a PLD such as an FPGA. In the reconfigurable hardware circuit, a process in which the processor loads a configuration document to implement hardware circuit configuration may be understood as a process in which the processor loads instructions to implement the functions of some or all of the units. In addition, the hardware circuit may be a hardware circuit designed for artificial intelligence, and may be understood as an ASIC, for example, an NPU, a TPU, or a DPU.

It can be learned that the units in the apparatus may be configured as one or more processors (or processing circuits) for implementing the foregoing methods, for example, a CPU, a GPU, an NPU, a TPU, a DPU, a microprocessor, a DSP, an ASIC, an FPGA, or a combination of at least two of these processor forms.

In addition, all or some of the units in the apparatus may be integrated, or may be implemented independently. In an implementation, the units may be integrated and implemented in a form of a system-on-a-chip (system-on-a-chip, SOC). The SOC may include at least one processor, configured to implement any one of the methods or implement functions of the units in the apparatus. The at least one processor may have different types. For example, the at least one processor includes a CPU and an FPGA, a CPU and an artificial intelligence processor, a CPU and a GPU, and the like.

Optionally, in the possible design, all related content of the steps related to the electronic apparatus in method embodiments shown in FIG. 1B to FIG. 5A and FIG. 5B may be cited in function descriptions of the corresponding functional modules. Details are not described herein again. The electronic apparatus in this possible design is configured to perform functions of the electronic apparatus in the test methods shown in FIG. 1B to FIG. 5A and FIG. 5B, and therefore can achieve the same effect as the foregoing test methods.

An embodiment of this application provides a test apparatus, including a processor and a memory. The memory is coupled to the processor, the memory is configured to store computer program code, and the computer program code includes computer instructions. When the processor reads the computer instructions from the memory, the test apparatus is enabled to perform the method shown in FIG. 1B to FIG. 5A and FIG. 5B.

An embodiment of this application provides a computer program product. When the computer program product is run on a computer, the computer is enabled to perform the method shown in FIG. 1B to FIG. 5A and FIG. 5B.

An embodiment of this application provides a computer-readable storage medium, including computer instructions. When the computer instructions are run on a terminal, a network device is enabled to perform the method shown in FIG. 1B to FIG. 5A and FIG. 5B.

An embodiment of this application provides a chip system, including one or more processors. When the one or more processors execute instructions, the one or more processors perform the method shown in FIG. 1B to FIG. 5A and FIG. 5B.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

In the descriptions of embodiments of this application, unless otherwise stated, "/" means "or", for example, A/B may represent A or B. In this specification, "and/or" merely describes an association relationship between associated objects, and indicates that three relationships may exist. For example, A and/or B may represent three cases: Only A exists, both A and B exist, and only B exists.

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the descriptions of embodiments of this application, unless otherwise specified, "a plurality of" means two or more than two.

In embodiments of this application, the word such as "example" or "for example" is used to represent an example, an illustration, or a description. Any embodiment or design described by "example" or "for example" in embodiments of this application should not be construed as being more preferred or advantageous than another embodiment or design. To be precise, the word such as "example" or "for example" is intended to present a related concept in a specific manner.

It may be understood that, to implement the foregoing functions, the foregoing communication device or the like includes a corresponding hardware structure and/or software module for implementing each function. It should be readily appreciated by a person skilled in the art that the example units and algorithm steps described with reference to embodiments disclosed in this specification can be implemented in embodiments of this application by using hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of embodiments of this application.

Functional module division may be performed on the communication device based on the foregoing method examples in embodiments of this application. For example, the functional modules may be obtained through division for corresponding functions, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division during actual implementation.

The foregoing descriptions of implementations allow a person skilled in the art to clearly understand that, for the purpose of convenient and brief description, division into the foregoing functional modules is used as an example for illustration. During actual application, the foregoing functions can be allocated to different functional modules and implemented based on a requirement, that is, an inner structure of an apparatus is divided into different functional modules to implement all or some of the functions described above. For a detailed working process of the foregoing system, apparatus, and unit, refer to a corresponding process in the foregoing method embodiments, and details are not described herein again.

## Claims

1. An adjustment method, comprising:
receiving a first message, wherein the first message indicates to adjust a temperature of a battery of a vehicle to a target temperature; and
adjusting the temperature of the battery of the vehicle based on the first message, to cause the temperature of the battery of the vehicle to be adjusted to the target temperature when the vehicle arrives at a charging station.

2. The method according to claim 1, wherein the first message is generated before the vehicle arrives at the charging station and when a first condition is met.

3. The method according to claim 2, wherein the first condition comprises at least one of the following:
a distance between the vehicle and the charging station is less than or equal to a first threshold, and/or estimated time for the vehicle to arrive at the charging station is less than or equal to a second threshold;
a power of a target charging pile in the charging station is greater than a third threshold; and/or a current of the target charging pile is greater than or equal to a fourth threshold; and/or a voltage of the target charging pile is greater than or equal to a sixth threshold; and
a remaining state of charge of the battery of the vehicle after the vehicle arrives at the charging station is greater than a fifth threshold.

4. The method according to any one of claims 1 to 3, wherein the adjusting the temperature of the battery of the vehicle based on the first message comprises:
when the temperature of the battery is not equal to the target temperature, adjusting the temperature of the battery of the vehicle based on the first message.

5. The method according to any one of claims 1 to 4, wherein the adjusting the temperature of the battery of the vehicle comprises:
adjusting the temperature of the battery of the vehicle based on a temperature control level, wherein the temperature control level is determined based on a power of an available charging pile and a state of charge of the battery of the vehicle at a first moment.

6. An adjustment method, comprising:
receiving first information sent by a map application, wherein the first information represents information about the vehicle and/or a charging station;
receiving second information sent by a battery management system, wherein the second information comprises a state of charge and a temperature of the battery;
generating a first message based on the first information and the second information, wherein the first message indicates to adjust the temperature of the battery of the vehicle to a target temperature; and
adjusting the temperature of the battery of the vehicle based on the first message, to cause the temperature of the battery of the vehicle to be adjusted to the target temperature when the vehicle arrives at the charging station.

7. The method according to claim 6, wherein the adjusting the temperature of the battery of the vehicle based on the first message comprises:
sending the first message to a thermal management system, wherein the thermal management system is configured to adjust the temperature of the battery of the vehicle based on the first message.

8. The method according to claim 6, wherein the adjusting the temperature of the battery of the vehicle based on the first message comprises:
sending the first message to the battery management system, wherein the battery management system is configured to send a first request to the thermal management system based on the first message and the temperature of the battery, and the first request is used to request the thermal management system to adjust the temperature of the battery of the vehicle.

9. The method according to any one of claims 6 to 8, wherein the first message is generated before the vehicle arrives at the charging station and when a first condition is met.

10. The method according to claim 9, wherein the first condition comprises at least one of the following:
a distance between the vehicle and the charging station is less than or equal to a first threshold, and/or estimated time for the vehicle to arrive at the charging station is less than or equal to a second threshold;
a power of a target charging pile in the charging station is greater than a third threshold; and/or a current of the target charging pile is greater than or equal to a fourth threshold; and/or a voltage of the target charging pile is greater than or equal to a sixth threshold; and
a remaining state of charge of the battery of the vehicle after the vehicle arrives at the charging station is greater than a fifth threshold.

11. The method according to any one of claims 6 to 10, wherein the adjusting the temperature of the battery of the vehicle based on the first message comprises:
when it is determined that the temperature of the battery is not equal to the target temperature, adjusting the temperature of the battery of the vehicle based on the first message.

12. The method according to any one of claims 6 to 11, wherein the adjusting the temperature of the battery of the vehicle based on the first message comprises:
determining a power of an available charging pile in the charging station and a state of charge of the battery of the vehicle at a first moment;
determining a temperature control level based on the power of the available charging pile and the state of charge of the battery of the vehicle at the first moment; and
adjusting the temperature of the battery of the vehicle based on the temperature control level.

13. The method according to any one of claims 6 to 12, wherein a location of the vehicle, at least one charging station, and a working state of the at least one charging station are displayed on a first interface of the map application.

14. The method according to any one of claims 6 to 13, wherein a navigation temperature adjustment state of the vehicle is further displayed on the first interface of the map application, and the navigation temperature adjustment state indicates that the vehicle is in a temperature adjustment state in a process of navigating to the charging station.

15. The method according to any one of claims 6 to 14, wherein the first information comprises at least one of the following: the distance between the vehicle and the charging station, the estimated time for the vehicle to arrive at the charging station, a type of each charging pile in the charging station, a power of each charging pile in the charging station, a rated current of each charging pile in the charging station, and a maximum voltage and a minimum voltage of each charging pile in the charging station.

16. The method according to claim 10, wherein the remaining state of charge of the battery is determined based on the state of charge of the battery, energy consumption information of the vehicle under different road conditions and at different vehicle speeds, and driving habit information of a user.

17. The method according to any one of claims 6 to 16, wherein the map application is configured to send the first information in response to a first operation, wherein the first operation is an operation that the user sets the map application to navigate to the charging station or pass by the charging station.

18. An electronic apparatus, comprising:
a receiving unit, configured to receive a first message, wherein the first message indicates to adjust a temperature of a battery of a vehicle to a target temperature; and
an adjustment unit, configured to adjust the temperature of the battery of the vehicle based on the first message, to cause the temperature of the battery of the vehicle to be adjusted to the target temperature when the vehicle arrives at a charging station.

19. The electronic apparatus according to claim 18, wherein the first message is generated before the vehicle arrives at the charging station and when a first condition is met.

20. The electronic apparatus according to claim 19, wherein the first condition comprises at least one of the following:
a distance between the vehicle and the charging station is less than or equal to a first threshold, and/or estimated time for the vehicle to arrive at the charging station is less than or equal to a second threshold;
a power of a target charging pile in the charging station is greater than a third threshold; and/or a current of the target charging pile is greater than or equal to a fourth threshold; and/or a voltage of the target charging pile is greater than or equal to a sixth threshold; and
a remaining state of charge of the battery of the vehicle after the vehicle arrives at the charging station is greater than a fifth threshold.

21. The electronic apparatus according to any one of claims 18 to 20, wherein the adjustment unit is specifically configured to:
when the temperature of the battery is not equal to the target temperature, adjust the temperature of the battery of the vehicle based on the first message.

22. The electronic apparatus according to any one of claims 18 to 21, wherein the adjustment unit is specifically configured to:
adjust the temperature of the battery of the vehicle based on a temperature control level, wherein the temperature control level is determined based on a power of an available charging pile and a state of charge of the battery of the vehicle at a first moment.

23. An electronic apparatus, comprising:
a first receiving unit, configured to receive first information sent by a map application, wherein the first information represents information about the vehicle and/or a charging station;
a second receiving unit, configured to receive second information sent by a battery management system, wherein the second information comprises a state of charge and a temperature of the battery;
a generation unit, configured to generate a first message based on the first information and the second information, wherein the first message indicates to adjust the temperature of the battery of the vehicle to a target temperature; and
an adjustment unit, configured to adjust the temperature of the battery of the vehicle based on the first message, to cause the temperature of the battery of the vehicle to be adjusted to the target temperature when the vehicle arrives at the charging station.

24. The electronic apparatus according to claim 23, wherein the adjustment unit is configured to:
send the first message to a thermal management system, wherein the thermal management system is configured to adjust the temperature of the battery of the vehicle based on the first message.

25. The electronic apparatus according to claim 23, wherein the adjustment unit is configured to:
send the first message to the battery management system, wherein the battery management system is configured to send a first request to the thermal management system based on the first message and the temperature of the battery, and the first request is used to request the thermal management system to adjust the temperature of the battery of the vehicle.

26. The electronic apparatus according to any one of claims 23 to 25, wherein the first message is generated before the vehicle arrives at the charging station and when a first condition is met.

27. The electronic apparatus according to claim 26, wherein the first condition comprises at least one of the following:
a distance between the vehicle and the charging station is less than or equal to a first threshold, and/or estimated time for the vehicle to arrive at the charging station is less than or equal to a second threshold;
a power of a target charging pile in the charging station is greater than a third threshold; and/or a current of the charging pile in the target charging station is greater than or equal to a fourth threshold; and/or a voltage of the target charging pile is greater than or equal to a sixth threshold; and
a remaining state of charge of the battery of the vehicle after the vehicle arrives at the charging station is greater than a fifth threshold.

28. The electronic apparatus according to any one of claims 23 to 27, wherein the adjustment unit is configured to:
when it is determined that the temperature of the battery is not equal to the target temperature, adjust the temperature of the battery of the vehicle based on the first message.

29. The electronic apparatus according to any one of claims 23 to 28, wherein the adjustment unit is configured to:
determine a power of an available charging pile in the charging station and a state of charge of the battery of the vehicle at a first moment;
determine a temperature control level based on the power of the available charging pile and the state of charge of the battery of the vehicle at the first moment; and
adjust the temperature of the battery of the vehicle based on the temperature control level.

30. The electronic apparatus according to any one of claims 23 to 29, wherein a location of the vehicle, at least one charging station, and a working state of the at least one charging station are displayed on a first interface of the map application.

31. The electronic apparatus according to any one of claims 23 to 30, wherein a navigation temperature adjustment state of the vehicle is further displayed on the first interface of the map application, and the navigation heating state indicates that the vehicle is in a temperature adjustment state in a process of navigating to the charging station.

32. The electronic apparatus according to any one of claims 23 to 31, wherein the first information comprises at least one of the following: the distance between the vehicle and the charging station, the estimated time for the vehicle to arrive at the charging station, a type of each charging pile in the charging station, a power of each charging pile in the charging station, a rated current of each charging pile in the charging station, and a maximum voltage and a minimum voltage of each charging pile in the charging station.

33. The electronic apparatus according to claim 27, wherein the remaining state of charge of the battery is determined based on the state of charge of the battery, energy consumption information of the vehicle under different road conditions and at different vehicle speeds, and driving habit information of a user.

34. The electronic apparatus according to any one of claims 23 to 33, wherein the map application is configured to send the first information in response to a first operation, wherein the first operation is an operation that the user sets the map application to navigate to the charging station or pass by the charging station.

35. An electronic apparatus, wherein the electronic apparatus comprises one or more processors and a memory, the memory stores code, and when the code is executed by the processor, the electronic apparatus is enabled to perform the method according to any one of claims 1 to 5, or the electronic apparatus is enabled to perform the method according to any one of claims 6 to 17.

36. A communication system, wherein the communication system comprises one or more electronic apparatuses and a server, and when the computer instructions are run on the electronic apparatus, the electronic apparatus is enabled to perform the method according to any one of claims 1 to 5, or the electronic apparatus is enabled to perform the method according to any one of claims 6 to 17.

37. A vehicle, wherein the vehicle comprises a processor and a memory, the memory is coupled to the processor, the memory stores computer program code, the computer program code comprises computer instructions, and when the processor reads the computer instructions from the memory, the vehicle is enabled to perform the method according to any one of claims 1 to 5, or the electronic apparatus is enabled to perform the method according to any one of claims 6 to 17.

38. A computer-readable storage medium, comprising computer instructions, wherein when the computer instructions are run on an electronic apparatus, the electronic apparatus is enabled to perform the method according to any one of claims 1 to 5, or the electronic apparatus is enabled to perform the method according to any one of claims 6 to 17.
